# EUROPEAN PATENT APPLICATION

(11) **EP 4 043 089 A1**
(43) Date of publication of application: **17.08.2022**
(21) Application number: 22155664.0
(22) Date of filing: 08.02.2022
(51) Int. Cl.: B01D 53/00, B01D 53/22, B01D 53/62, E21B 41/00

(54) **METHOD AND SYSTEM FOR CAPTURING AND SEQUESTERING BIOGENIC CARBON DIOXIDE**

(30) Priority: 10.02.2021 GB 202101802
(71) Applicant: Future Biogas Limited, Guildford, Surrey GU2 7YD (GB)
(72) Inventor: LUKAS, Philipp Hagen, Guildford, GU2 7YD (GB)
(74) Representative: HGF

(57) **Abstract**

The present application provides a method of capturing and sequestering biogenic carbon dioxide. The method comprises, at a plurality of bioreactor installations (1a, 1b, 1c): generating a biofuel by fermentation of a biomass, separating a biogenic carbon dioxide stream from the biofuel, liquefying the biogenic carbon dioxide stream, combining the liquefied biogenic carbon dioxide streams from the plurality of biofuel upgraders, and sequestering the liquefied biogenic carbon dioxide at a sequestration site (19).

## Description

This invention relates to a method and system for capturing and sequestering biogenic carbon dioxide, in particular a method and system for separating biogenic carbon dioxide from a biofuel.

### BACKGROUND

Carbon capture and sequestration forms an important tool for reducing atmospheric carbon to tackle climate change. Carbon capture and sequestration can be performed on exhaust gasses, for example from power plants, to extract carbon dioxide and store it for sequestration. Carbon captured from combustion of fossil fuels renders the process at best carbon neural if all of the carbon is captured.

A bioproduct, for example a biogas such as biomethane, is generated by fermentation of a biomass. One common form of fermentation is anaerobic digestion of the biomass to generate a biogas formed mostly of biomethane and biogenic carbon dioxide. Another form of fermentation is ethanolic fermentation of the biomass to generate bioethanol and biogenic carbon dioxide.

Captured carbon dioxide may be sequestered in underground reservoirs, for example exhausted hydrocarbon reservoirs, or saline aquifers.

### BRIEF SUMMARY OF THE DISCLOSURE

In accordance with the present disclosure there is provided a method of capturing and sequestering biogenic carbon dioxide, the method comprising:
at a plurality of bioreactor installations:
   generating a biofuel by fermentation of a biomass,
   separating a biogenic carbon dioxide stream from the biofuel,
   liquefying the biogenic carbon dioxide stream,
combining the liquefied biogenic carbon dioxide streams from the plurality of biofuel upgraders, and
sequestering the liquefied biogenic carbon dioxide at a sequestration site.

In examples, sequestering the liquefied biogenic carbon dioxide at a sequestration site means storage of the biogenic carbon dioxide at the sequestration site and excludes enhanced oil or gas recovery (EOR, EGR). In particular, sequestration comprises injection of the biogenic carbon dioxide into a depleted hydrocarbon well or a saline aquifer.

As the biomass captures atmospheric carbon as it grows, separating the biogenic carbon dioxide from the biofuel and sequestering that biogenic carbon dioxide provides a carbon negative process that acts to remove carbon from the atmosphere and sequester it.

Advantageously, liquefying the separated biogenic carbon dioxide and combining the liquefied biogenic carbon dioxide streams from a plurality of biofuel upgraders allows the biogenic carbon dioxide to be more easily transported to the sequestration site.

In examples, the plurality of bioreactor installations may comprise two or more, for example five or more, bioreactor installations. Each bioreactor installation may comprise one or more bioreactors, for example a plurality of bioreactors.

In examples, the biofuel is generated by anaerobic digestion of the biomass, wherein the biofuel comprises biomethane and biogenic carbon dioxide. In examples, one or more of the bioreactor installations comprises one or more anaerobic digester tanks. In other examples, one or more of the bioreactor installations comprises a landfill gas capture system adapted to capture gases emitted from anaerobic digestion occurring in a landfill site. Advantageously, combining liquefied carbon dioxide streams from different sources (e.g., anaerobic digester tanks and landfill gas) diversifies the system.

In other examples, the method comprises ethanolic fermentation of a biomass to generate a bioethanol, a biogenic carbon dioxide, and ethanolic fermentation residues. In this example, generating a biofuel by fermentation of a biomass comprises fermentation of the ethanolic fermentation residues. In this example, the method may further comprise combining the biogenic carbon dioxide from the ethanolic fermentation and the biogenic carbon dioxide stream from fermentation of the ethanolic fermentation residues. The combined biogenic carbon dioxide may be combined with biogenic carbon dioxide from a further bioreactor installation. In examples, the biogenic carbon dioxide from the ethanolic fermentation and the biogenic carbon dioxide stream from fermentation of the ethanolic fermentation residues may be liquefied before being combined, or they may be combined and then liquefied.

In examples, the bioethanol is a biofuel. In other examples, the bioethanol is used in production of beverages, for example a spirit such as whiskey or vodka.

Accordingly, two biogenic carbon dioxide streams can be generated from a single bioreactor installation: a first from the ethanolic fermentation and a second from the fermentation, for example anaerobic digestion, of the ethanolic fermentation residues. Accordingly, carbon capture is increased and two utilisable bioproducts are generated: bioethanol and biomethane.

The biomass may comprise a purpose-grown feedstock, a waste feedstock, or a combination. For example, the feedstock may comprise a purpose-grown plant or algae. In examples, the feedstock may comprise an energy crop such as maize, rye, grass, sugar beets or sugar canes. In examples, the feedstock may comprise cup-plant, clover, or legumes. The feedstock may comprise the entire plant or a part of the plant, for example silage, or fruit (e.g., wheat grain).

In examples, carbon is sequestered in the soil during feedstock cultivation. In examples, the feedstock is grown in a sustainable manner on arable land to ensure that carbon is efficiently captured while minimising detrimental side effects of feedstock production. In examples, the feedstock is grown using one or more of: no-till farming, fertilising the crops with digestate from the bioreactor, planning cover crops to reduce erosion, precision farming (e.g., adjusting seed rate and spacing), plant population, inter row cultivation, and cropping, and crop rotation.

In examples, the feedstock is grown in a way that sequesters carbon in the soil. For example, using digestate from the bioreactor as a fertiliser increases soil carbon retention.

In examples, the feedstock for the bioreactor comprises more than 50% purpose grown feedstock, for example more than 80% purpose grown feedstock, such as 100% purpose grown feedstock. The feedstock for the biomass may include biowastes and by-products.

In this way, cultivation of the feedstock is carbon neutral or carbon negative. Feedstock cultivation (including fuel use, fertiliser manufacture and use, digestate spreading, and nitrous oxide emissions) might typically comprise 25% or more of the carbon footprint of the overall process. Employing sustainable agriculture, particularly soil management to sequester carbon, can significantly reduce the carbon footprint of the feedstock production.

In examples, the method further comprises storing the liquefied biogenic carbon dioxide in a local storage tank at each bioreactor installation. For example, each biofuel upgrader may output the separated and liquefied biogenic carbon dioxide to a local storage tank. In examples, each biofuel upgrader is connected to only one local storage tank. Each local storage tank may comprise a capacity of at least 30 tonnes of liquefied biogenic carbon dioxide.

In examples, the method may further comprise transporting the liquefied biogenic carbon dioxide from each of the local storage tanks to a central storage facility. In particular, the method may comprise transporting the liquefied carbon dioxide via a tanker vehicle. The tanker vehicle may receive liquefied biogenic carbon dioxide from the or each local storage tank. The central storage facility may comprise a storage capacity of at least 5,000 tonnes of biogenic carbon dioxide, for example between 5,000 tonnes and 10,000 tonnes of biogenic carbon dioxide.

In examples, the method further comprises transporting the liquefied biogenic carbon dioxide from the central storage facility to the sequestration site, for example transporting the liquefied biogenic carbon dioxide by a tanker ship to an offshore sequestration site. In examples, the offshore sequestration site may be a depleted subsea hydrocarbon well. In examples, the liquefied biogenic carbon dioxide may be transferred from the central storage facility to a sequestration storage tank where the biogenic carbon dioxide is evaporated and brought into a supercritical condition for transport to the sequestration site.

In examples, the method may comprise combining the biogenic carbon dioxide streams during transportation of the biogenic carbon dioxide to the central storage facility, for example in a tanker vehicle as described above. Additionally or alternatively, the method may comprise combining the biogenic carbon dioxide streams at the central storage facility, for example in a storage tank of the central storage facility.

In examples, after separating the biogenic carbon dioxide from the biofuel the remaining biofuel stream may have a purity of at least 85 mol%, for example at least 95 mol%, for example at least 99.5 mol%.

In examples, each of the biofuel upgraders may be configured to separate the biogenic carbon dioxide by one of: a membrane-based gas permeation process, a scrubbing process, a pressure swing adsorption process (PSA), a cryogenic separation process, or a combination thereof.

In examples, each of the biofuel upgraders may comprise a two-stage membrane separator. In examples, the output from the two-stage membrane separator is provided to a cryogenic liquefaction unit, for example a single or multi stage cryogenic liquefaction unit. In examples, the cryogenic liquefaction unit comprises a flash-vessel (single equilibrium stage).

In examples, liquefying the biogenic carbon dioxide may comprise a single equilibrium stage process. A single equilibrium stage process may comprise passing the gas into a single equilibrium stage vessel (e.g., a flash vessel) where the vapour and liquid phases are in thermodynamic equilibrium, and then removing the liquid phase biogenic carbon dioxide from a lower end of the vessel.

In examples the liquefied biogenic carbon dioxide output from the single stage equilibrium separation process may comprise a biomethane impurity of greater than 0.05 mol%, for example between 0.05 mol% and 0.3 mol%, for example between 0.1 mol% and 0.2 mol%.

Advantageously, a single stage liquefaction process provides energy efficient liquefaction and provides a liquefied biogenic carbon dioxide stream of sufficient purity to be sequestered.

In examples, liquefying the biogenic carbon dioxide may comprise a multi stage process, i.e., a distillation process.

In examples, liquefying the biogenic carbon dioxide stream comprises compressing and drying the biogenic carbon dioxide before liquefying the biogenic carbon dioxide.

In examples, the method may comprise simultaneously separating and liquefying the biogenic carbon dioxide stream. Advantageously, using a combined biomethane upgrader and biogenic carbon dioxide liquefaction unit can eliminate methane emissions from this process. As the separation works by simultaneously liquefying the biogenic carbon dioxide stream and capturing the remaining biomethane, there is no possibility of methane leakage. Methane leakage at the separation might account for 10% to 30% of the carbon footprint of a typical biomethane production system, and so eliminating this leakage contributes significantly to the overall process of capturing and sequestering biogenic carbon dioxide.

In addition, the carbon footprint of the method of capturing and sequestering biogenic carbon dioxide may be further improved by actively managing the gas domes of the anaerobic digesters in order to prevent methane leakage. In particular, overpressure situations and the like can be predicted and avoided to prevent venting of gases to atmosphere from the gas dome. For example, the gas dome management system may be as described in EP2535402A1, which is incorporated herein by reference.

Furthermore, the carbon footprint of the method of capturing and sequestering biogenic carbon dioxide may be further improved by covering the digestate lagoons and capturing emissions (including biomethane) from the digestate lagoons. Biomethane emissions from uncovered lagoons may contribute 10% or more to the overall carbon footprint of a typical biomethane production system, and so eliminating this leakage contributes significantly to the overall process of capturing and sequestering biogenic carbon dioxide.

The method may include determining or estimating a carbon footprint of the method. The carbon footprint of the method may include greenhouse gas emissions and/or sequestration associated with all parts of the method. In particular, the determined or estimated carbon footprint may include at least: the carbon footprint of the agricultural activities for producing the feedstock, the carbon footprint of the anaerobic digestion process, including energy use and methane / carbon dioxide slippage, the carbon footprint of digestate storage and processing, and the carbon footprint of the sequestration process. The method may include generating a carbon offset certificate, or similar, based on the determined or estimated carbon footprint of the method.

Accordingly, by reducing or eliminating the carbon footprint of the anaerobic digestion process (gas dome management) and the digestate storage (covered lagoons), it is possible to sequester more carbon and thereby improve the method. In addition, sustainable agricultural processes (including using the digestate for soil sequestration), and the use of green energy, can further reduce the carbon footprint of the method and improve the method.

For comparison, a typical anaerobic digestion process may have a carbon footprint of about 30 g/MJ. This would typically comprise roughly 40% methane slip from the anaerobic digestion plant and the upgrader that separates the methane from the carbon dioxide, roughly 15% grid parasitic energy consumption, roughly 15% fertiliser production, roughly 10% emissions from digestate storage, roughly 10% nitrous oxide emissions from the soil during feedstock production, and the rest being made up of transport and fuel used in the various stages of the process.

In contrast, the method disclosed herein may have a carbon footprint of 1 to 2 g/MJ. In particular, methane leakage at the upgrader is prevented by capturing the biomethane and biogenic carbon dioxide. In addition, gas dome management can significantly reduce methane leakage from the anaerobic digester, and by covering the digestate lagoons further carbon footprint is eliminated. In addition, by employing sustainable agriculture and soil sequestration the carbon footprint of the feedstock may be significantly reduced or even zero-carbon. Similarly, by using renewable energy sources further carbon footprint can be eliminated. The 1 to 2 g/MJ carbon footprint of the method may comprise about 50% methane leakage from the anaerobic digestion, which is difficult to completely eliminate. It may also include about 33% parasitic grid energy, and about 17% emissions from digestate storage (also difficult to completely eliminate). A carbon footprint of this magnitude may be equivalent to roughly 5% to 10% of the sequestered carbon. Accordingly, the method disclosed herein may significantly reduce the carbon footprint of the method and thereby increase the net carbon sequestered. This in turn increases the value of the carbon offset certificates.

In accordance with another aspect of the present disclosure there is provided a system for capturing biogenic carbon dioxide, the system comprising:
a plurality of bioreactor installations, each bioreactor installation comprising:
   a bioreactor configured to generate a biofuel by fermentation of a biomass:
   a biofuel upgrader configured to separate a biogenic carbon dioxide stream from the biofuel, and
   a liquefier configured to liquefy the biogenic carbon dioxide stream, and
a liquid handling system configured to receive the liquefied biogenic carbon dioxide streams from the plurality of bioreactor installations, combine the liquefied biogenic carbon dioxide streams, and store the combined liquefied biogenic carbon dioxide for sequestration.

In examples, sequestering the liquefied biogenic carbon dioxide at a sequestration site means storage of the biogenic carbon dioxide at the sequestration site and excludes enhanced oil or gas recovery (EOR, EGR). In particular, sequestration comprises injection of the biogenic carbon dioxide into a depleted hydrocarbon well or a saline aquifer. The sequestration site may comprise a depleted hydrocarbon well or a saline aquifer, and does not comprise an active or producing active hydrocarbon well.

In examples, the bioreactor of each of the plurality of bioreactor installations comprises an anaerobic digester configured to generate a biofuel comprising biomethane and biogenic carbon dioxide.

In examples, at least one of the plurality of bioreactor installations further comprises an ethanolic fermenter configured to receive a biomass and to generate a bioethanol, a biogenic carbon dioxide, and ethanolic fermentation residues. In such an example, the bioreactor of the at least one bioreactor installation is configured to receive the fermentation residues and generate the biofuel by fermentation of the fermentation residues.

In examples, each bioreactor installation may further comprise a local storage tank arranged to receive and combine the biogenic carbon dioxide streams from the bioreactor and the ethanolic fermenter.

In examples, the at least one of the plurality of bioreactor installations further comprises a second liquefier arranged to liquefy the biogenic carbon dioxide from the ethanolic fermenter. The system may be arranged to combine the biogenic carbon dioxide streams either before or after the liquefier(s).

Accordingly, two biogenic carbon dioxide streams can be generated from a single bioreactor installation: a first from the ethanolic fermentation and a second from the fermentation, for example anaerobic digestion, of the ethanolic fermentation residues. Accordingly, carbon capture is increased and two utilisable bioproducts are generated: bioethanol and biomethane.

In examples, the liquid handling system comprises a plurality of local storage tanks, each local storage tank being disposed at one of the plurality of bioreactor installations and adapted to receive and store the liquefied biogenic carbon dioxide. Each local storage tank may comprise a capacity of at least 30 tonnes of liquefied biogenic carbon dioxide.

In examples, the liquid handling system may further comprise a central storage facility configured to receive the liquefied biogenic carbon dioxide from the plurality of bioreactor installations. The central storage facility may comprise a storage capacity of at least 5,000 tonnes of biogenic carbon dioxide, for example between 5,000 tonnes and 10,000 tonnes of biogenic carbon dioxide.

In examples, the liquid handling system may further comprise a transport vehicle operable to transport the liquefied biogenic carbon dioxide from each of the local storage tanks to the central storage facility. In particular, the transport vehicle may comprise a tanker vehicle. The tanker vehicle may receive liquefied biogenic carbon dioxide from the or each local storage tank.

In examples, the system further comprises a sequestration site adapted to receive the liquefied biogenic carbon dioxide from the central storage facility. In examples, the sequestration site is an offshore sequestration site, for example a depleted subsea hydrocarbon well. In examples, the sequestration site or the central storage facility comprises a sequestration storage tank in which the biogenic carbon dioxide is evaporated and brought into a supercritical condition for transfer to the sequestration site.

In examples, the liquid handling system comprises a pressure control system adapted to substantially match the pressures of the different liquefied biogenic carbon dioxide streams when combining the liquefied biogenic carbon dioxide.

For example, a first storage tank (e.g., a local storage tank, a tanker vehicle, or the central storage facility) containing a biogenic carbon dioxide may be connected to a second storage tank (e.g., a local storage tank, a tanker vehicle, or the central storage facility) containing a biogenic carbon dioxide by a gas phase pipe and a liquid phase pipe. Once the pressures of the first and second storage tanks are equalised a pump may pump the biogenic carbon dioxide from the first storage tank into the second storage tank. In other examples, one of the first and second storage tanks comprises a venting valve to vent biogenic carbon dioxide to atmosphere and create a lower pressure in the storage tank to draw the biogenic carbon dioxide from the other storage tank. In other examples, one of the first and second storage tanks may comprise a refrigeration unit operable to cool the biogenic carbon dioxide in that storage tank and thereby create a lower pressure to draw the biogenic carbon dioxide from the other storage tank. In other examples, the first and second storage tanks may be connected by a pipe having two valves and a heating element. During operation, the first valve on the inlet of one of the storage tanks is closed, and the heating element evaporates a small amount of biogenic carbon dioxide. This pushes the remaining liquid biogenic carbon dioxide from the pipe into the other storage tank. The second valve is then closed, and the biogenic carbon dioxide vapour condenses, creating a vacuum in the pipe. The first valve is then opened and biogenic carbon dioxide is drawn into the pipe. The process is repeated to move biogenic carbon dioxide from one storage tank to the other.

In examples, each biofuel upgrader is configured to output a biofuel stream at a purity of at least 85 mol%, for example at least 95 mol%, for example at least 99.5 mol%.

In examples, each biofuel upgrader comprises one of: a membrane separator, a pressure swing absorber (PSA), an amine scrubber, a cryogenic separator, or a combination thereof.

In examples, each of the biofuel upgraders may comprise a two-stage membrane separator. In examples, the output from the two-stage membrane separator is provided to a cryogenic liquefaction unit, for example a single or multi stage cryogenic liquefaction unit. In examples, the cryogenic liquefaction unit comprises a flash-vessel (single equilibrium stage).

In examples, the system may further comprise a compressor and a dryer for compressing and drying the biogenic carbon dioxide upstream of the liquefier.

In examples, at least one of the plurality of bioreactor installations comprises a combined separator and liquefier configured to simultaneously separate the biogenic carbon dioxide from the biofuel and liquefy the biogenic carbon dioxide.

In examples, the liquefaction unit comprises a single stage equilibrium stage separator. A single equilibrium stage separator may comprise a single equilibrium stage vessel (e.g., a flash vessel) into which the gas is fed such that the vapour and liquid phases are in thermodynamic equilibrium. The single equilibrium stage vessel comprises a liquid phase outlet at a lower end from which liquefied biogenic carbon dioxide can be extracted.

Advantageously, a single equilibrium stage liquefaction unit provides energy efficient liquefaction and provides a liquefied biogenic carbon dioxide stream of sufficient purity to be sequestered.

In particular, in examples the liquefied biogenic carbon dioxide output from the single equilibrium stage liquefaction unit, for example a flash vessel, may comprise a biomethane impurity of greater than 0.1 mol%, for example between 0.1 mol% and 0.3 mol%, for example between 0.1 mol% and 0.2 mol%. Such a biomethane impurity level may be acceptable for sequestration, but would likely not be acceptable for other uses of biogenic carbon dioxide that require higher purity (e.g., food uses). Therefore, a more efficient liquefier can be used to reduce energy use.

In other examples, each biofuel upgrader may comprise a multi-stage liquefaction unit, for example a distiller.

Advantageously, using a combined biomethane upgrader and biogenic carbon dioxide liquefaction unit can eliminate methane emissions from this process. As the separation works by simultaneously liquefying the biogenic carbon dioxide stream and capturing the remaining biomethane, and both the biomethane and biogenic carbon dioxide are captured, there is no possibility of methane leakage. Methane leakage at the separation might account for 10% to 30% of the carbon footprint of a typical biomethane production system, and so eliminating this leakage contributes significantly to the overall process of capturing and sequestering biogenic carbon dioxide.

In addition, the carbon footprint of the method of the system may be further improved by providing an active gas dome management system for managing the anaerobic digesters. In particular, the active gas dome management system may be operable to predict and avoid overpressure situations and the like to prevent venting of gases to atmosphere from the gas dome.

Furthermore, the system may comprise covered digestate lagoons that capture emissions (including biomethane) from the digestate lagoons. Biomethane emissions from uncovered lagoons may contribute 10% or more to the overall carbon footprint of a typical biomethane production system, and so eliminating this leakage contributes significantly to the overall process of capturing and sequestering biogenic carbon dioxide.

As explained above, a carbon footprint of the system (and the method of using the system) may be determined or estimated. The carbon footprint may be reduced in the different ways described above, and a carbon offset certificate, or similar, may be generated based on the determined or estimated carbon footprint.

In accordance with another aspect of the present disclosure there is provided a bioreactor installation comprising:
a fermentation unit for fermenting a biomass to generate a biogas, the fermentation unit comprising an outlet for the biogas,
a combined biogas upgrader and liquefaction unit configured to receive the biogas from the outlet and separate a liquefied biogenic carbon dioxide stream from the biogas; and
a storage for storing the liquefied biogenic carbon dioxide.

In examples, the combined biofuel upgrader and liquefaction unit comprises a separator, for example a two-stage membrane separator, and a single equilibrium stage liquefaction unit, for example a flash-vessel.

A single equilibrium stage liquefaction unit may comprise a single equilibrium stage vessel (e.g., a flash-vessel) into which the gas (mostly biogenic carbon dioxide as most of the biofuel has been removed) is fed such that the vapour and liquid phases are in thermodynamic equilibrium. The single equilibrium stage vessel comprises a liquid phase outlet at a lower end from which liquefied biogenic carbon dioxide can be extracted. Advantageously, a single equilibrium stage separator provides energy efficient liquefaction and provides a liquefied biogenic carbon dioxide stream of sufficient purity to be sequestered.

In particular, in examples the liquefied biogenic carbon dioxide output from the single stage equilibrium separator may comprise a biomethane impurity of greater than 0.1 mol%, for example between 0.1 mol% and 0.3 mol%, for example between 0.1 mol% and 0.2 mol%.

Another aspect of the present disclosure provides a method comprising:
ethanolic fermentation of a biomass to generate a bioethanol, a first biogenic carbon dioxide, and ethanolic fermentation residues,
anaerobic digestion of the ethanolic fermentation residues to generate a biogas,
separation of the biogas into a biofuel, for example biomethane, and a second biogenic carbon dioxide, and
combining the first and second biogenic carbon dioxides.

In examples, the method may comprise liquefying the combined first and second biogenic carbon dioxides. In other examples, the method may comprise separately liquefying the first and second biogenic carbon dioxides, and then combining the liquefied first and second biogenic carbon dioxides.

In examples, separation of the biogas may comprise upgrading the biogas.

In examples, the first and second biogenic carbon dioxides are stored, transported, and sequestered. The method may include combining the first and second biogenic carbon dioxides with carbon dioxide from other sources, for example a biogenic carbon dioxide from one or more further bioreactor installations.

In examples, the bioethanol is used or beverage production.

Another aspect of the present disclosure provides a bioreactor installation comprising:
an ethanolic fermenter configured to generate a bioethanol, a first biogenic carbon dioxide, and ethanolic fermentation residues from a biomass,
an anaerobic digester configured to receive the ethanolic fermentation residues from the ethanolic fermenter and generate a biogas,
a separator configured to separate the biogas into the biofuel, for example biomethane, and a second biogenic carbon dioxide, and
a storage tank adapted to store the first and second biogenic carbon dioxides.

In examples, the bioreactor installation may comprise at least one liquefaction unit arranged to liquefy the first and/or second biogenic carbon dioxides. The bioreactor installation may comprise separate liquefaction units for the first and second biogenic carbon dioxides.

In examples, the separator comprises an upgrader.

In examples, the bioreactor installation comprises a liquid handling system configured to combine the first and second liquefied biogenic carbon dioxide streams and store the combined liquefied biogenic carbon dioxide for sequestration.

In examples, there is also provided a system comprising a plurality of the bioreactor installations, each bioreactor installation comprising an ethanolic fermenter and an anaerobic digester as described above. In examples, the system further comprises a transport system for transporting the liquefied biogenic carbon dioxide from each of the bioreactor installations to a sequestration site.

### BRIEF DESCRIPTION OF THE DRAWINGS

Embodiments of the invention are further described hereinafter with reference to the accompanying drawings, in which:
FIG. 1 shows a schematic illustration of a bioreactor and biofuel upgrader;
FIG. 2 shows a schematic illustration of a plurality of bioreactors, a liquid handling system, and a sequestration site;
FIG. 3 shows a schematic illustration of a combined ethanolic fermenter and bioreactor; and
FIG. 4 shows a schematic illustration of a plurality of ethanolic fermenters and bioreactors, a liquid handling system, and a sequestration site.

### DETAILED DESCRIPTION

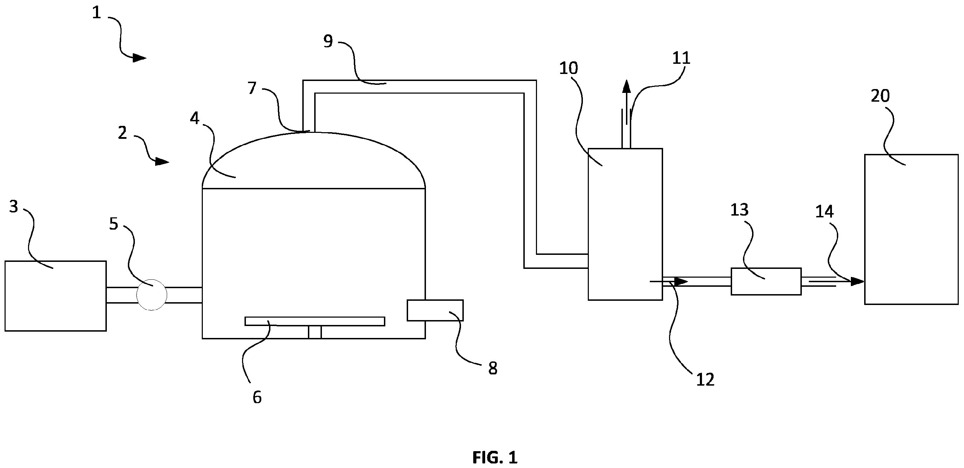

FIG. 1 illustrates a bioreactor installation 1 that includes a bioreactor adapted to receive a biomass from a feedstock input 3. In this example, the bioreactor is an anaerobic digester 2 adapted to anaerobically ferment the biomass to generate a biofuel, in particular a biogas.

The anaerobic digester 2 comprises a digester tank 4 into which biomass is input via feedstock input 3, for example by pump 5. An agitator 6 is disposed in the digester tank 4. The agitator 6 may be a jet agitator configured to pump compressed gas into the biomass to agitate the biomass in the digester tank 4. Additionally or alternatively, the agitator 6 may be a mixer adapted to rotate to mix the biomass in the digester tank 4.

Within the digester tank 4 the biomass undergoes anaerobic digestion and creates a biogas comprising mostly of biomethane and biogenic carbon dioxide. The anaerobic digestion may occur at between 30°C and 60°C. The anaerobic digestion in the digester tank 4 may be a batch process or a continuous process. The biogas raises to the top of the digester tank 4 and an outlet 7 is provided to convey the biogas from the digester tank 4. Each digester tank may have an expandable gas dome that raises and lowers with the volume of biogas in the digester tank 4.

The digester tank 4 also comprises an outlet 8 for digestate, i.e., what remains of the biomass after anaerobic digestion. In examples, the digestate may be used as a fertiliser for growing further feedstock. In examples, the digestate may be separated into a liquid digestate and a solid digestate. A part of the liquid digestate may be retained and used to adjust the viscosity of the biomass in the digester tank 4. The solid digestate and remaining liquid digestate can be used as a fertiliser, for example for growing purpose grown feedstock for the biomass.

Liquid digestate may be stored in one or more lagoons at the bioreactor installation 1 and methane emissions from the liquid digestate may be captured, for example in a covered lagoon, and input into the digester tank 4. The one or more lagoons may have a capacity for three months or more of digestate, for example five months or more, for example eight or nine months or more. The one or more covered lagoons may adapted to capture gases emitted from the digestate, in particular biomethane.

The anaerobic digester 2 may additionally include a gas management system adapted to control the volume of biogas in the gas domes of the digester tanks 4. In particular, the gas management system may be adapted to control venting or flaring of biomass from the digester tank 4. In examples where a bioreactor installation 1 has a plurality of digester tanks 4, the gas dome management system may be configured to control the gas domes such that each gas dome has the approximately the same level, and to fill and empty the gas domes simultaneously.

The outlet 7 is connected to a pipe 9 that conveys the biogas to a biogas upgrader 10. The biogas upgrader 10 is configured to separate the biogas into a biofuel stream, in particular a biomethane stream 11, and a biogenic carbon dioxide stream 12. The biomethane stream 11 can be connected to a distribution network, for example a mains gas distribution network, or the biomethane stream 11 can be stored, for example in a storage tank, or the biomethane stream 11 can be provided to plant that combusts the biomethane stream 11, for example a combined heat and power (CHP) plant. The biomethane stream 11 may be enriched, for example with propane or liquefied petroleum gas (LPG), to bring the concentration up to the grid requirements. The biomethane stream 11 may be odorised. In examples, some of the biomethane is used to provide heat and/or power for the bioreactor installation 1.

The biogenic carbon dioxide stream 12 is passed through a liquefaction unit 13 to liquefy the biogenic carbon dioxide. A liquefied biogenic carbon dioxide output stream 14 is thereby provided.

As shown, the liquefied biogenic carbon dioxide stream 14 is stored in a local storage tank 20 of the bioreactor installation 1. In examples, the bioreactor installation 1 comprises only one local storage tank 20 for the liquefied biogenic carbon dioxide 14. The local storage tank 20 may be a cryogenic storage tank. The local storage tank 20 may have a capacity of at least 30 tonnes of liquefied biogenic carbon dioxide.

As the liquefied carbon dioxide is not intended for use in food or further chemical processing, advantageously there is no need to batch test each batch of liquefied carbon dioxide, and so the bioreactor installation can advantageously include only a single local storage tank 20 for the liquefied biogenic carbon dioxide 14.

Accordingly, the bioreactor installation 1 shown in FIG. 1 receives a biomass and anaerobically digests the biomass to provide a biogas, which is then separated into a biomethane stream 11 and a liquefied biogenic carbon dioxide stream 14 that is locally stored.

In examples, the bioreactor installation 1 shown in FIG. 1 has an additional power source that may comprise a renewable power source such as photovoltaic cells or a wind turbine.

In examples, the bioreactor installation 1 may include one or more digester tanks. In examples, the bioreactor installation 1 may include one or more primary digester tanks and one or more secondary digester tanks. In particular, partially anaerobically digested biomass may be transferred from a primary digester tank to a secondary digester tank for further digestion. The conditions in the secondary digester tank may differ from the conditions in the primary digester tank. Both primary and secondary digester tanks output a biogas comprising biomethane and biogenic carbon dioxide.

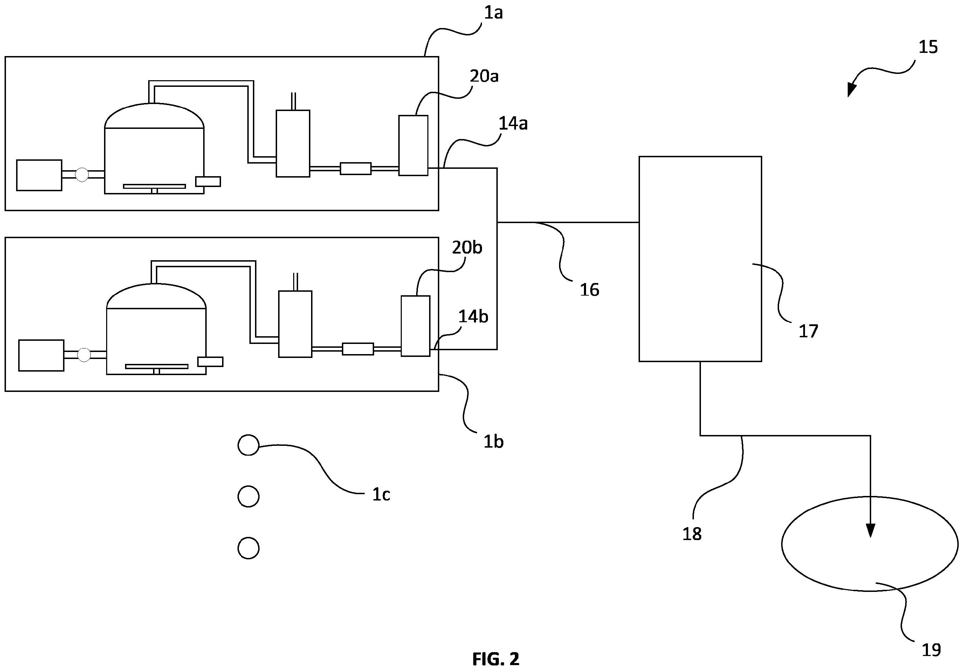

FIG. 2 illustrates a system 15 of bioreactor installations 1a, 1b, 1c, each bioreactor installation 1a, 1b, 1c comprising the bioreactor installation 1 described with reference to FIG. 1. In the example of FIG. 2 only two bioreactor installations 1a, 1b are illustrated, but further bioreactor installations 1c may be provided as indicated. Specifically, in examples the system 15 may comprise two or more bioreactor installations 1a, 1b, for example five or more bioreactor installations 1a, 1b, for example ten or more bioreactor installations 1a, 1b. In addition, in FIG. 2 each bioreactor installation 1a, 1b is illustrated as having a single digester tank (4, see FIG. 1), but it will be appreciated that each bioreactor installation 1a, 1b may include more than one digester tank, for example 2 or 3 digester tanks.

Each of the bioreactor installations 1a, 1b of the system 15 may be configured to process between about 50,000 tonnes and about 100,000 tonnes of biomass per year.

As illustrated, the system 15 includes a liquid handling system 16 adapted to receive the liquefied biogenic carbon dioxide streams 14a, 14b from each bioreactor installation 1a, 1b, 1c. In particular, the liquid handling system 16 is adapted to receive the liquefied biogenic carbon dioxide streams 14, 14b from the local storage tanks 20, 20b of each bioreactor installation 1a, 1b.

In the illustrated example the liquid transport system 16 is configured to combine the liquefied biogenic carbon dioxide streams 14a, 14b and convey the combined liquefied biogenic carbon dioxide streams 14, 14b to a central storage facility 17. In other examples, the liquid handling system 16 is configured to separately convey the liquefied biogenic carbon dioxide streams 14a, 14b to the central storage facility 17 where the liquefied biogenic carbon dioxide streams 14a, 14b are combined, for example in a storage tank.

The liquid handling system 16 is configured to balance the pressures of the two or more liquefied biogenic carbon dioxide streams 14a, 14b when they are combined. In particular, the liquid handling system 16 may comprise a pump arranged to pump at least one of the two or more liquefied biogenic carbon dioxide streams 14a, 14b. For example, the pump may be arranged to pump liquefied biogenic carbon dioxide from tank (e.g., a tank of a tanker vehicle) into a storage tank (e.g., of the central storage facility 17).

In one example, a tank (e.g., a tank of a tanker vehicle) is connected to a storage tank (e.g., of the central storage facility 17) by two pipes: a vapour phase pipe and a liquid phase pipe. The pressures between the tank and the storage tank then equalise, and the pump can act to pump the biogenic carbon dioxide with minimal pressure differential between the tank and the storage tank.

In examples, the tank (e.g., the tank of the tanker vehicle) may comprise a heater adapted to heat the biogenic carbon dioxide in the tank and increase the pressure in the tank above the pressure in the storage tank (e.g., the central storage facility 17). This pressure differential can be used to drive the biogenic carbon dioxide into the storage tank.

In examples, the pressure in the storage tank (e.g., the central storage facility 17) may be reduced by venting a small proportion of the biogenic carbon dioxide held therein so that the pressure in the tank (e.g., a tank of the tanker vehicle) is greater and the pressure differential can be used to drive the biogenic carbon dioxide into the storage tank. Similarly, the storage tank (e.g., the central storage facility 17) can be equipped with a refrigerator unit adapted to cool the storage tank and reduce the pressure therein.

In examples, a pipe may connect the tank (e.g., a tank of a tanker vehicle) to a storage tank (e.g., the central storage facility 17), and the pipe may include a valve at either end and a heating element. Initially, the valve at the tank is closed and the heating element is activated to evaporate a small amount of carbon dioxide that pushes the remaining liquid carbon dioxide from the pipe. The valve at the storage tank is then closed, and the carbon dioxide vapour in the pipe condenses, creating a vacuum. The valve at the tank is then opened and the vacuum draws the carbon dioxide from the tank and towards the storage tank.

In examples, the liquid handling system 16 comprises one or more tanker vehicles, for example one or more road tankers, one or more rail tankers, or one or more tanker ships. In other examples, a pipeline may be provided to transport the biogenic carbon dioxide to the central storage facility 17, either in vapour or liquefied form.

In examples, the central storage facility 17 comprises one or more large storage tanks, for example with a capacity of between 5,000 tonnes and 10,000 tonnes of biogenic carbon dioxide. In examples, the central storage facility 17 is located in a coastal region, preferably with dock facilities. The central storage facility 17 may comprise a repurposed natural gas distribution hub.

At the central storage facility 17 the biogenic carbon dioxide may be combined with carbon dioxide from other sources, for example non-biogenic carbon dioxide. In examples, the carbon dioxide from other sources may comprise carbon dioxide captured from exhaust gasses of fossil fuel combustion, such as from combustion of coal or natural gas. In examples, the carbon dioxide from other sources may comprise carbon dioxide captured directly from the air (DACCS). In examples, the carbon dioxide from other sources may comprise carbon dioxide captured from the exhaust of biofuel combustion, i.e., BECCS.

As illustrated in FIG. 2, from the central storage facility 17 the liquefied biogenic carbon dioxide is transported by transport system 18 to a sequestration site 19. In examples, the sequestration site 19 may comprise an offshore location, for example a depleted and/or repurposed subsea hydrocarbon well. In such examples the transport system 18 may comprise one or more tanker ships or pipelines.

In examples where the sequestration site comprises a deep, disused subsea hydrocarbon well, the liquefied biogenic carbon dioxide is injected into the well. Prior to injection, the pressure and temperature of the liquefied biogenic carbon dioxide are adjusted so that the liquefied biogenic carbon dioxide is in a supercritical condition.

In examples, the system 15 may include a sequestration storage tank. The sequestration storage tank may be provided at the sequestration site, or at the central storage facility 17. The transport system 18 may transport the liquefied biogenic carbon dioxide from the central storage facility 17 to the sequestration storage tank. Periodically, liquefied biogenic carbon dioxide can be transferred from the tank of the central storage facility 17 to the sequestration storage tank, and from there to the sequestration site. In the sequestration storage tank the liquefied biogenic carbon dioxide can be evaporated and brought into a supercritical condition. The biogenic carbon dioxide is in a supercritical condition when the pressure is above the critical pressure (i.e., above about 73.8 bar) and/or if the temperature is above the critical temperature (i.e., above about 31°C). It will be appreciated that the supercritical condition is provided when only one of the pressure or temperature is above the respective critical value. Accordingly, the supercritical biogenic carbon dioxide can be cooled (e.g., to sea-temperature) within the sequestration site during sequestration without condensing or freezing, which may impede sequestration.

From the sequestration storage tank the supercritical biogenic carbon dioxide is pumped to the sequestration site. A pipe may connect the sequestration storage site to the sequestration site, and the pipe may be a subsea pipe, either on the sea floor or below the sea-floor, and the pipe may be hundreds of kilometres long. At the sequestration site the liquefied biogenic carbon dioxide is piped below the seabed. A pump can be provided, for example at the sequestration storage tank, to pump the supercritical liquefied biogenic carbon dioxide through the pipe to the sequestration site.

In other examples, the sequestration site 19 may comprise a saline aquifer, or a cavern. In other examples, the sequestration site 19 may comprise an onshore sequestration site, such as underground porous stone layers. Preferably, sequestration of the biogenic carbon dioxide does not comprise enhanced oil or gas recovery (EOR, EGR). In particular, sequestration of the carbon dioxide is preferably a method for sequestering the entirety of the biogenic carbon dioxide at the sequestration site, and does not result in extraction of further carbon-based fuels.

At the sequestration site 19 the biogenic carbon dioxide is residually trapped in porous formations, such as sandstone, by absorption and dissolution in water, or it may irreversibly react with minerals in the rock, namely calcium and magnesium, to form long lasting carbonates.

In examples, each bioreactor installation 1a, 1b is located nearby the biomass source, for example nearby arable farmland where the purpose grown biomass is grown for the bioreactor installation 1a, 1b. Each bioreactor installation 1a, 1b may additionally or alternatively be located nearby an industrial site such as a factory or other large energy consumer such that the biomethane stream 11 can be used in a CHP plant or similar to meet all or some of the energy needs of the energy consumer. Accordingly, each bioreactor installation 1a, 1b provides carbon-negative biofuel by separating the biogenic carbon dioxide from the biogas and sequestering it.

In examples, the system 15 measures the mass of biogenic carbon dioxide sequestered as soil organic carbon in the field where a purpose grown biomass is grown. In examples, the system 15 measures the mass flow of biomethane generated by the anaerobic digester 2. In examples, the system 15 measures the mass of biogenic carbon dioxide captured from the biogas and sequestered. This can be balanced against carbon dioxide released during cultivation of the biomass and carbon dioxide associated with the power used at the bioreactor installations 1 to determine the carbon dioxide sequestration rate. This may be used for a certification scheme, in particular a carbon offset certificate.

In other examples, similar to those of FIGS. 1 and 2, at least one of the one or more bioreactor installations may comprise a landfill gas capture system. Such a landfill gas capture system is adapted to capture gases emitted from a waste landfill. Anaerobic digestion occurs within landfills, generating biomethane and biogenic carbon dioxide. This gas can be captured and separated and the carbon dioxide can be liquefied as per the examples of FIGS. 1 and 2.

Advantageously, the system 15 illustrated in FIG. 2 may comprise a mixture of anaerobic digesters 2 that receive a purpose grown crop and landfill gas capture systems that capture landfill gas. Accordingly, the supply of gases to the system 15 is diversified.

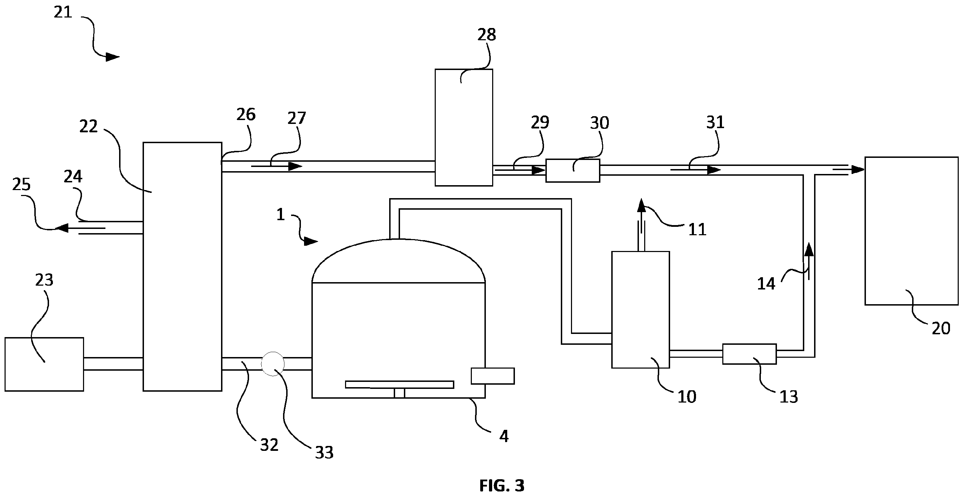

FIG. 3 illustrates a bioreactor installation 21 that includes an ethanolic fermenter 22 bioreactor adapted to receive a biomass from a feedstock input 23. The biomass, for example grain, is input into the ethanolic fermenter 22 and anaerobically fermented to generate a bioethanol and a by-product gas comprising mostly biogenic carbon dioxide. As shown in FIG. 3, the ethanolic fermenter 22 comprises an outlet 26 for the by-product gas 27.

In examples, the bioethanol may be used as a fuel, or for food and beverage production, for example in whiskey or vodka production.

Depending on the purity of the by-product gas 27, the bioreactor installation 21 may include a separator 28 arranged to remove impurities from the by-product gas 27 to provide a biogenic carbon dioxide stream 29. In some examples, the separator 28 is not required as the by-product gas 27 from the ethanolic fermenter 22 is of sufficient purity.

The biogenic carbon dioxide stream 29 is then liquefied at liquefaction unit 30 to provide a liquefied biogenic carbon dioxide stream 31.

As illustrated in FIG. 3, the ethanolic fermenter 22 also includes an outlet 32 for fermentation residues. The fermentation residues are subjected to distillation to separate the fermentation residues into a bioethanol-rich head-product and a stillage. The bioethanol-rich head-product can be dewatered to produce a bioethanol. If the bioethanol is for use in a beverage, for example whiskey, then further processing may be required, for example to remove methanol.

The stillage comprises yeast and biomass residues. The stillage is then separated or concentrated, for example at unit 33, to reduce the water content, and then fed into the digester tank 4. The digester tank 4 may be the digester tank 4 of the bioreactor installation 1 such as the bioreactor installation 1 described with reference to FIG. 1. That is, in the example of FIG. 3 the fermentation residues from the ethanolic fermenter 22 are the biomass input for the digester tank 4 of the example FIG. 1. Additional biomass feedstock may be added to the digester tank 4 along with the fermentation residues from the ethanolic fermenter 22.

As with the example of FIG. 1, within the digester tank 4 the fermentation residues undergo anaerobic digestion and generate a biogas that is separated at a biogas upgrader 10 into a biomethane stream 11 and a biogenic carbon dioxide stream that is liquefied at liquefaction unit 13 to provide a liquefied biogenic carbon dioxide stream 14. In some examples, the biogenic carbon dioxide stream 29 output from the ethanolic fermenter can be liquefied at liquefaction unit 13.

In examples, some of the biomethane stream 11 may be combusted to provide heat for the ethanolic fermenter 22, and/or may be combusted in a CHP to provide energy for the ethanolic fermenter 22 and other apparatus of the bioreactor installation 21.

As shown the liquefied biogenic carbon dioxide stream 31 and the liquefied biogenic carbon dioxide stream 14 are combined and stored in a local storage tank 20.

In the example of FIG. 3, the biogas upgrader 10 may be an amine scrubber and may be integrated into the heat management system of the ethanolic fermenter 22.

The local storage tank 20 may be as described above with reference to FIGS. 1 and 2.

Advantageously, the combined ethanolic fermentation and subsequent anaerobic digestion of the fermentation residues creates two usable biofuels (the bioethanol 25 and the biomethane 11) and captures the biogenic carbon dioxide from both processes.

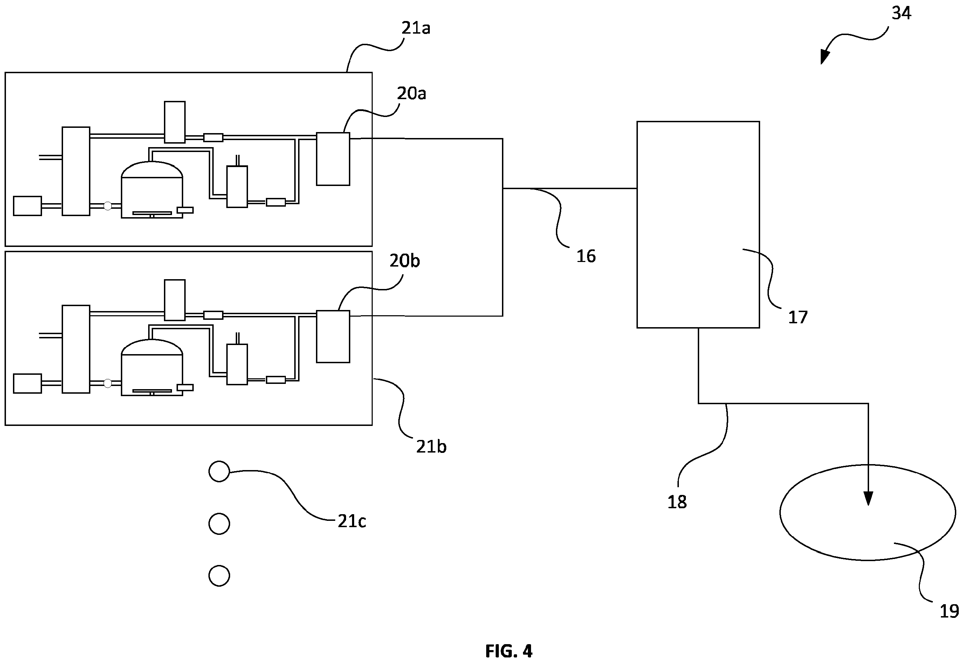

Similar to FIG. 2, FIG. 4 illustrates a system 34 of bioreactor installations 21a, 21b, 21c, each bioreactor installation 21a, 21b, 21c comprising the bioreactor installation 21 described with reference to FIG. 3. In the example of FIG. 4 only two bioreactor installations 21a, 21b are illustrated, but further bioreactor installations 21c may be provided as indicated. Specifically, in examples the system 34 may comprise two or more bioreactor installations 21, for example five or more bioreactor installations 21, for example ten or more bioreactor installations 21.

Each of the bioreactor installations 21a, 21b of the system 34 may be configured to process between about 200,000 and 1,000,000 tonnes of biomass per year, generating between about 80,000 and 320,000 tonnes of bioethanol per year, and between about 80,000 and 320,000 tonnes of biogenic carbon dioxide per year.

As illustrated, similar to the system 15 of FIG. 2, the system 34 of FIG. 4 includes a liquid handling system 16 adapted to receive the liquefied biogenic carbon dioxide from each bioreactor installation 21a, 21b. In particular, the liquid handling system 16 is adapted to receive the liquefied biogenic carbon dioxide from the local storage tanks 20, 20b of each bioreactor installation 21a, 21b.

In the illustrated example the liquid transport system 16 is configured to combine the liquefied biogenic carbon dioxide from the different bioreactor installations 21a, 21b and convey the combined liquefied biogenic carbon dioxide to a central storage facility 17. In other examples, the liquid handling system 16 is configured to separately convey the liquefied biogenic carbon dioxide from each bioreactor installation 21a, 21b to the central storage facility 17 where the liquefied biogenic carbon dioxide is combined.

In examples, the liquid handling system 16 comprises one or more tanker vehicles, for example one or more road tankers, one or more rail tankers, or one or more tanker ships.

In examples, the central storage facility 17 comprises one or more large storage tanks, for example with a capacity of between about 5,000 tonnes and about 10,000 tonnes of liquefied biogenic carbon dioxide, for example about 7,500 tonnes. In examples, the central storage facility 17 is located in a coastal region, preferably with dock facilities. The central storage facility 17 may comprise a repurposed natural gas distribution hub.

As illustrated in FIG. 4, from the central storage facility 17 the liquefied biogenic carbon dioxide is transported by transport system 18 to a sequestration site 19. In examples, the sequestration site 19 may comprise an offshore location, for example a depleted and/or repurposed subsea hydrocarbon well. In such examples the transport system 18 may comprise one or more tanker ships or pipelines.

The sequestration site and process may be as described above in relation to the examples of FIG. 2.

In examples, each bioreactor installation 21a, 21b is located nearby the biomass source, for example nearby arable farmland where the purpose grown biomass is grown for the bioreactor installation 21a, 21b. Each bioreactor installation 21a, 21b may additionally or alternatively be located nearby a factory or other large energy consumer such that the produced biomethane stream 11 can be used in a CHP plant or similar to meet all or some of the energy needs of the energy consumer. Accordingly, each bioreactor installation 21a, 21b can provide carbon-negative biofuel by separating the biogenic carbon dioxide from the biogas and sequestering it.

In various examples, the feedstock that forms the biomass input into the bioreactor installation 1 or FIG. 1 or the bioreactor installation 21 of FIG. 3 may comprise a purpose grown feedstock. For example, the feedstock may comprise maize, rye, wheat, grass, barley, sugar beets, cup-plant, clover, legumes is planted on arable soils and are harvested. Whole plants can be stored as a silage, fruits can be separated from the straw and stored separately.

In examples, the purpose grown biomass is grown in a sustainable way to minimise its carbon footprint. The sustainability of feedstock production can be improved by any one or combination or: no-till farming, utilisation of digestate as fertiliser, utilisation of perennial plants as purpose grown biomass, planting of cover-crops to minimise erosion, precision farming (i.e. adjusting seed rate and spacing, plant population, inter row cultivation and cropping and digestate placing) and wider cropping rotation such as inclusion of viable spring cropping or other crops based on local market opportunities.

In examples, the purpose grown biomass is cultivated in a way that the soil carbon content will increase over time. The build-up of carbon in the soil contributes towards the goal of sequestering carbon. It has been found that the application of digestate on soils which were depleted from years of conventional farming can re-gain their carbon.

It is estimated that around 0.7 to 1 tonne of carbon (2.57 to 3.67 tonnes of carbon dioxide) can be sequestered per hectare and per year within the first twenty years of sustainable farming. This is a significant amount, and contributes to the carbon sequestration of the overall system 1, 21.

As described above, using a purpose grown feedstock allows the carbon impact of the entire system to be assessed and controlled, and ensures a ready and reliable supply of biomass for the bioreactor installations 1, 21.

In other examples, the feedstock that forms the biomass input into the bioreactor installation 1 or FIG. 1 or the bioreactor installation 21 of FIG. 3 may comprise a biodegradable waste or by-products. For example, the biomass may comprise waste paper, grass clippings, leftover food, sewage, and/or animal waste.

In examples, the feedstock that forms the biomass input into the bioreactor installation 1 or FIG. 1 or the bioreactor installation 21 of FIG. 3 may comprise a mixture of purpose grown feedstock and a biodegradable waste or by-products. In examples, the mixture may comprise 50% or more purpose grown biomass portion.

In examples, the feedstock that forms the biomass input into the bioreactor installation 1 or FIG. 1 or the bioreactor installation 21 of FIG. 3 may comprise only a biodegradable waste or by-products. Use of biodegradable waste or by-products may be preferable as it prevents that material releasing carbon dioxide and/or methane if it were disposed of in other ways, such as in landfill.

In the various examples of FIGS. 1 to 4 the biogas produced in the digester tank 4 is passed through an upgrader 10 that separates the biogas into a biomethane and a biogenic carbon dioxide. The biogenic carbon dioxide is liquefied by liquefaction unit 13.

In examples, the upgrader 10 comprises a membrane-based gas permeation separator, an organic solvent scrubber with high selectivity for carbon dioxide, a pressure swing absorber (PSA), a cryogenic distiller, or a combination of these. In one example, the upgrader 10 comprises a two-membrane stage separator.

In examples, waste heat generated by the upgrader 10, in particular by a compressor or similar of the upgrader 10, can be captured by a heat exchanger and used to heat the digestion tank 4.

In examples, the liquefaction unit 13 receives the biogenic carbon dioxide stream from the upgrader 10 and liquefies it. The liquefaction unit 13 may be configured to compress, pre-clean, and dry the biogenic carbon dioxide stream and then cool the biogenic carbon dioxide at a refrigeration stage.

In examples, the liquefaction unit 13 comprises a single equilibrium stage, for example a flash-vessel, where the vapour phase biogenic carbon dioxide and liquid phase biogenic carbon dioxide are in a thermodynamic equilibrium. This allows liquid phase biogenic carbon dioxide to be removed from a lower position in the single equilibrium stage (e.g., at or towards the bottom of the flash-vessel), and the non-condensable gasses, including the vapour phase biogenic carbon dioxide, are extracted from a higher point of the single equilibrium stage vessel and recycled.

Such a single equilibrium stage liquefaction unit 13 can provide a liquefied biogenic carbon dioxide comprising a biomethane impurity of greater than 0.1 mol%, for example between 0.1 mol% and 0.3 mol%, for example between 0.1 mol% and 0.2 mol%. This level of purity is not sufficient for food grade uses of the biogenic carbon dioxide, but is sufficient for sequestration of the biogenic carbon dioxide as trace amounts of biomethane and oxygen are acceptable for sequestration.

In other examples, the liquefaction unit 13 comprises a plurality of equilibrium stages, for example two or more equilibrium stages. Each subsequent equilibrium stage requires a lower temperature.

In examples, the liquefaction unit 13, for example the single or multi equilibrium stage liquefaction unit 13, may comprise a refrigeration unit having a refrigeration circuit that includes a compressor, an expansion throttle, and heat exchangers arranged to cool the biogenic carbon dioxide stream 14 to below its boiling point. The refrigerant circuit may comprise a refrigerant with a low global warming potential and a low ozone depletion potential, for example ammonia.

In examples, the liquefaction unit 13 may comprise an economiser adapted to cool the refrigerant in the refrigerant circuit upstream of the expansion throttle to improve the efficiency of the refrigeration unit.

In examples, the refrigeration unit may comprise an expansion turbine in place of the expansion throttle, where the expansion turbine is configured to recover energy from the expanding refrigerant to improve the efficiency of the refrigeration unit.

In examples, the upgrader 10 and the liquefaction unit 13 may be combined as a combined separator-liquefier.

In examples, the combined separator-liquefier comprises a two-stage membrane separator adapted to separate the biomethane from the biogenic carbon dioxide, and a cryogenic unit adapted to cool and liquefy the biogenic carbon dioxide.

In other examples, the combined separator-liquefier comprises a cryogenic separation unit having a cooler arranged to cool the biogas below the boiling point of the biogenic carbon dioxide, and a separation vessel arranged to receive the cooled biogas and to separate the biogas into a liquefied biogenic carbon dioxide and a gaseous biomethane. Similar to the single equilibrium stage liquefaction unit, the liquefied biogenic carbon dioxide can be removed from a lower part of the separation vessel, and the gaseous biomethane can be removed from an upper part of the separation vessel along with other non-condensable gasses (e.g., oxygen, some carbon dioxide, and traces of hydrogen and dinitrogen). The gaseous biomethane and other non-condensable gasses can be recycled to a position upstream of the coolers if the biomethane purity needs to be increased further.

Furthermore, other trace impurities are also removed in a single stage separation unit, in particular water, ammonia, hydrogen sulphide, and acetaldehyde.

In some examples the biogas upgrader, in particular a single stage liquefaction unit, may comprise a screw compressor (i.e., not an oil-free reciprocating compressor), as the biogenic carbon dioxide for sequestration may be permitted to contain trace lubricants whereas food grade carbon dioxide is not.

In some examples, the combined separator-liquefier comprises a multi-stage cryogenic distillation unit. In such examples the multi-stage cryogenic distillation unit comprises a plurality of distillation stages arranged in series and a plurality of coolers arranged to successively cool the biogas to lower temperature to improve the separation of the biomethane and biogenic carbon dioxide.

Advantageously, the biogas upgrader captures both the biomethane and biogenic carbon dioxide, so there is no leakage of biomethane or biogenic carbon dioxide. This significantly reduces the carbon footprint of the process.

In some examples, an existing bioreactor installation comprising a digester tank, for example an anaerobic digester tank, may be retrofitted with a liquefaction unit adapted to liquefy biogenic carbon dioxide from the biogas. Accordingly, biogenic carbon dioxide can be captured, combined with another stream of biogenic carbon dioxide, and sequestered.

In some examples the biomethane stream output from the biogas upgrader is provided to a gas distribution network via a grid entry unit (GEU) that enriches the biomethane with propane to bring the concentration up to the requirements for the gas distribution network. In such an example, enriched biomethane (i.e., biomethane + propane) that does not meet the requirements of the gas distribution network can be recycled back to the biogas upgrader rather than be flared (burned). This is possible because, although the propane may contaminate the liquefied biogenic carbon dioxide stream output by the biogas upgrader, this may be acceptable for sequestration of the biogenic carbon dioxide whereas it would not be acceptable for food grade carbon dioxide. Accordingly, costly and inefficient flaring can be avoided.

### Specific Example 1:

A bioreactor installation similar to that illustrated in FIG. 1 comprises first and second parallel primary digester tanks and one secondary digester tank. Each digester tank has a volume of about 6,000 cubic metres and is equipped with a gas dome with a net storage volume of around 2,500 cubic metres.

Each of the first and second primary digesters is provided with a biomass feedstock via a dedicated feed hopper providing storage space for around 24 hours' worth of biomass. The bioreactor installation is fed with about 80,000 to 90,000 tonnes per year of a feedstock mixture comprises about 80% maize silage and about 20% rye and grass. In the first and second primary digester tanks the biomass is subject to anaerobic digestion and the bioreactor installation produces around 2000 Nm³/h of biogas with a biomethane content of about 50% to 55% (the remainder being almost wholly biogenic carbon dioxide).

The bioreactor installation has a combined upgrader and liquefaction unit that separates the biogas into a biomethane stream and a liquefied biogenic carbon dioxide stream. The combined upgrader and liquefaction unit include a boiler at which some of the biomethane is combusted for heat. The combined upgrader and liquefaction unit outputs around 1,150 Sm³ per hour unenriched biomethane with a purity of about 98 mol%, and a liquid biogenic carbon dioxide stream of 41 tonnes per day with a purity of greater than about 99 mol%. For example, if a single equilibrium stage vessel is used then the liquefied biogenic carbon dioxide may comprise up to about 1,500 ppm (i.e., about 0.15 mol%) of biomethane, and up to about 700 ppm (i.e., about 0.07 mol%) of oxygen. In examples, the liquefied biogenic carbon dioxide may comprise between about 800 ppm and 1,500 ppm (i.e., between about 0.08 mol% and 0.15 mol%) of biomethane, and between about 300 ppm and 700 ppm (i.e., between about 0.03 mol% and 0.07 mol%) of oxygen.

The 80,000 tonnes to 90,000 tonnes per year throughput of the bioreactor installation advantageously allows the feedstocks to be produced locally, and the emissions from transport and distribution are limited. Accordingly, the bioreactor installation can be associated with a farm, or a small number of local farms, to provide the feedstock.

The electrical power demand for this example bioreactor installation would be between about 800 kW and about 900 kW. The electrical power can be provided mostly from the mains grid, and is preferably purchased as green power, for example hydro power, photovoltaic power or wind power. Part of the power demand of the bioreactor installation can be covered by an onsite photovoltaic plant with a peak capacity of twice the average power uptake of the plant (e.g., about 1,800 kW).

The three gas domes of the primary and second digester tanks are controlled via a gas dome management system configured to balance the volume of biogas in the three gas domes. The gas dome management system is configured to control the gas domes such that each of the gas domes has approximately the same level, and to fill and empty the gas domes simultaneously.

Feeding of the biomass into the primary digester tanks, and from the primary digester tanks to the secondary digester tank, is controlled by a feed control system associated with the gas dome management system. The feed rate of the biomass may be controller based on the level of gas in the gas domes.

In examples, the gas dome management system and/or the feed control system is configured to control the gas domes (e.g., biogas outlet valves, vents, and feed control system) to provide a gas dome fill volume of between about 60% and about 80%, preferably about 70%, and to maintain the desired throughput of biomethane. This can help to ensure that in case of a breakdown or maintenance there is excess capacity in the gas domes, so avoids needing to flare biogas.

The combined upgrader and liquefaction unit receives all of the biogas output from the primary and secondary digester tanks. The operational rate of the combined upgrader and liquefaction unit may be dependent on the fill volume of the gas domes. For example, if the fill volume of the gas domes is greater than about 55%, the combined upgrader and liquefaction unit may operate at full capacity, and if the fill volume of the gas domes is down to about 20% then the combined upgrader and liquefaction unit may operate at about half capacity

The bioreactor installation is equipped with flow meters arranged to measure the flared biogas, and with sensors to measure venting events.

Digestate from the digester tanks, typically the secondary digester tank, is output and separated into a solid digestate and a liquid digestate. The bioreactor installation of this example produces about 17,000 tonnes per year of solid digestate, and about 40,000 tonnes per year of liquid digestate. The solid digestate is stored onsite and on fields prior to spreading as fertiliser. The liquid digestate is stored in a covered lagoon adapted to capture further biogas released from the liquid digestate. The covered lagoon may have a capacity of about 28,000 cubic metres. Biogas captured in the covered lagoon may be combined with biogas stream from the digesters and enter the combined upgrader and liquefaction unit.

The combined biogas upgrader and liquefaction unit consists of a two-stage membrane separation coupled with a cryogenic step. The biogas is preconditioned and compressed with a first compressor to a pressure between about 9 and about 20 bar(g) and then subjected to a first membrane stage. The retentate of the first membrane stage is the inlet of the second membrane stage. The permeate of the second membrane stage is recycled in front of the first compression step. The retentate of the second membrane stage is biomethane. The permeate of the first membrane stage is compressed with a second compressor to a pressure higher than the compressor pressure of the first compressor, typically to 10 to 20 bar(g). The compressed gas is then further dried and cleaned and cooled down to the dew point in order to liquefy the biogenic carbon dioxide. The non-condensable gases from the liquefaction step flow to the pressure side of the first compressor.

The liquefied biogenic carbon dioxide is stored in a cryogenic local storage tank at boiling conditions at a pressure between 10 and 20 bar(g). The pressure can be adjusted to minimize the power uptake of the first and second compressors and of the refrigerant compressor of the refrigeration circuit that liquefies the biogenic carbon dioxide, while maintaining a quality setpoint of the produced biomethane. The liquefied carbon dioxide is transported from the local storage tank to a central storage facility, as described above, and mixed with other liquefied biogenic carbon dioxide streams before being sequestered.

In examples, the central storage facility is an array of one or more tanks with a total volume of about 10,000 tonnes. The pressure in the tank(s) of the central storage facility is kept at 10 to 13 bar by occasionally evaporating and venting off a small portion of carbon dioxide. The carbon dioxide is then collected via a tanker ship and transported to an injection site where it is evaporated, compressed to supercritical state, and injected into the injection site, for example a depleted subsea gas reservoir.

The system may include other identical or similar bioreactor installations that produce other liquefied biogenic carbon dioxide streams, where all of the liquefied biogenic carbon dioxide streams are combined before sequestration as previously described. In examples, the system may include three, five, or 10 bioreactor installations distributed across an area around the central storage facility. For example, all of the bioreactor installations may be within about 150 miles (241 km) of the central storage facility.

### Specific Example 2:

A bioreactor installation similar to that of FIG. 3 may be an ethanol production plant. The ethanol production plant may comprise an ethanolic fermenter and at least one digester tank arranged to receive the fermentation residues from the ethanolic fermenter.

The ethanolic fermenter can produce about 80,000 tonnes per year of bioethanol, and about 80,000 tonnes per year of biogenic carbon dioxide. In addition, about 80,000 tonnes dry matter per year ethanolic fermentation residues are produced, from about 240,000 tonnes per year of dry matter of purpose grown biomass, usually grain. The ethanolic fermentation residues can be used as a biomass for anaerobic digestion.

The biogenic carbon dioxide from the ethanolic fermentation process, which equates to around 220 tonnes per day, is liquified with a recovery rate of around 85%.

The ethanolic fermentation residues are concentrated to 12% total solids (TS) and then fed into an anaerobic digestion system that has a fermentation volume of about 36,000 cubic metres. In this example, the anaerobic digestion system comprises six digestion tanks, each with a fermentation volume of about 6,000 cubic metres. The digestion tanks are arranged in parallel (there are no secondary digester tanks). The digester tanks retain the ethanolic fermentation residues for about 21 days.

In the digester tanks the ethanolic fermentation residues undergoes anaerobic digestion and produces biogas. The produced biogas is around 6,100 Nm³ per hour, of which about 60% is biomethane.

The biogas is upgraded to about 4,100 Sm³ per hour of biomethane with an amine scrubber. The heat supply for the amine scrubber is provided by the heating system of the ethanolic fermenter, and the waste heat from the amine scrubber is fed back into the heat management system at a lower temperature.

The biogenic carbon dioxide stream provided by the upgrader is liquefied, and provides about 106 tonnes per day of liquefied biogenic carbon dioxide.

The liquefied biogenic carbon dioxide stream from the liquefaction unit is mixed with the liquefied biogenic carbon dioxide from the anaerobic digestion system such that two stream of biogenic carbon dioxide are combined. The combined biogenic carbon dioxide is then locally stored, transported to a central storage facility, and sequestered, as described with reference to Specific Example 1.

In an alternative example, the biogenic carbon dioxide from the ethanolic fermentation can be mixed with the permeate of the first stage prior to being liquefied.

Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A method of capturing and sequestering biogenic carbon dioxide, the method comprising:
at a plurality of bioreactor installations:
generating a biofuel by fermentation of a biomass,
separating a biogenic carbon dioxide stream from the biofuel,
liquefying the biogenic carbon dioxide stream,
combining the liquefied biogenic carbon dioxide streams from the plurality of biofuel upgraders, and
sequestering the liquefied biogenic carbon dioxide at a sequestration site.

2. The method of claim 1, wherein the biofuel is generated by anaerobic digestion of the biomass, wherein the biofuel comprises biomethane and biogenic carbon dioxide.

3. The method of claim 1, further comprising, ethanolic fermentation of a biomass to generate a bioethanol, a biogenic carbon dioxide, and ethanolic fermentation residues, and wherein generating a biofuel by fermentation of a biomass comprises fermentation of the ethanolic fermentation residues.

4. The method of claim 3, further comprising combining the biogenic carbon dioxide from the ethanolic fermentation residues and the biogenic carbon dioxide from fermentation of the ethanolic fermentation residues.

5. The method of any preceding claim, wherein the biomass comprises a purpose-grown feedstock.

6. The method of any preceding claim, further comprising storing the liquefied biogenic carbon dioxide in a local storage tank at each bioreactor installation.

7. The method of claim 6, wherein each local storage tank comprises a capacity of at least 30 tonnes of liquefied biogenic carbon dioxide.

8. The method of any of claims 6 to 7, further comprising transporting the liquefied biogenic carbon dioxide from each of the local storage tanks to a central storage facility, for example transporting the liquefied biogenic carbon dioxide in a tanker vehicle.

9. The method of claim 8, wherein the central storage facility comprises a storage capacity of at least 5,000 tonnes of liquefied biogenic carbon dioxide, for example between 5,000 tonnes and 10,000 tonnes of liquefied biogenic carbon dioxide.

10. The method of claim 9, further comprising transporting the liquefied biogenic carbon dioxide from the central storage facility to the sequestration site, for example transporting the liquefied biogenic carbon dioxide by a tanker ship to an offshore sequestration site such as a disused subsea hydrocarbon well.

11. The method of any preceding claim, comprising simultaneously separating the biogenic carbon dioxide stream from the biofuel and liquefying the biogenic carbon dioxide stream.

12. The method of any preceding claim, wherein liquefying the biogenic carbon dioxide stream comprises a single equilibrium stage liquefaction process.

13. The method of claim 12, wherein the liquefied biogenic carbon dioxide output from the single equilibrium stage liquefaction process comprises a biomethane impurity of greater than 0.1 mol%, for example between 0.1 mol% and 0.3 mol%, for example between 0.1 mol% and 0.2 mol%.

14. A system for capturing biogenic carbon dioxide, the system comprising:
a plurality of bioreactor installations, each bioreactor installation comprising:
a bioreactor configured to generate a biofuel by fermentation of a biomass,
a biofuel upgrader configured to separate a biogenic carbon dioxide stream from the biofuel, and
a liquefier arranged to liquefy the biogenic carbon dioxide stream, and
a liquid handling system configured to receive the liquefied biogenic carbon dioxide streams from the plurality of bioreactor installations, combine the liquefied biogenic carbon dioxide streams, and store the combined liquefied biogenic carbon dioxide for sequestration.

15. The system of claim 14, wherein each bioreactor comprises an anaerobic digester configured to generate a biofuel comprising biomethane and biogenic carbon dioxide.

16. The system of claim 14 or claim 15, wherein at least one of the plurality of bioreactor installations further comprises an ethanolic fermenter configured to receive a biomass and to generate a bioethanol, a biogenic carbon dioxide, and ethanolic fermentation residues, and wherein the bioreactor of the at least one bioreactor installation is configured to receive the fermentation residues and generate the biofuel by fermentation of the fermentation residues.

17. The system of claim 16, further comprising a storage tank arranged to receive and combine the biogenic carbon dioxide streams from the bioreactor and the ethanolic fermenter.

18. The system of any of claims 14 to 17, wherein the liquid handling system comprises a plurality of local storage tanks, each local storage tank being disposed at one of the plurality of bioreactor installations and adapted to receive and store the liquefied biogenic carbon dioxide.

19. The system of claim 18, wherein each local storage tank comprises a capacity of at least 30 tonnes of liquefied biogenic carbon dioxide.

20. The system of any of claims 14 to 19, wherein the liquid handling system further comprises a central storage facility configured to receive the liquefied biogenic carbon dioxide from the plurality of bioreactor installations.

21. The system of claim 20, wherein the central storage facility comprises a storage capacity of at least 5,000 tonnes of liquefied biogenic carbon dioxide, for example between 5,000 tonnes and 10,000 tonnes of liquefied biogenic carbon dioxide.

22. The system of any of claims 14 to 21, wherein the liquid handling system comprises a pressure control system adapted to substantially match the pressures of the different liquefied biogenic carbon dioxide from the plurality of bioreactors when combining the liquefied biogenic carbon dioxide.

23. The system of any of claims 14 to 22, wherein each of the plurality of biofuel upgraders comprises one of: a membrane separator, a pressure swing absorber, an amine scrubber, a cryogenic distiller, or a combination thereof.

24. The system of any of claims 14 to 23, wherein at least one of the plurality of bioreactor installations comprises a combined biofuel separator and liquefier configured to simultaneously separate the biogenic carbon dioxide from the biofuel and liquefy the biogenic carbon dioxide.

25. The system of any of claims 14 to 24, wherein the liquefier comprises a single equilibrium stage liquefier.

26. The system of claim 25, wherein the single stage equilibrium stage liquefier is configured to output the biogenic carbon dioxide stream comprising a biomethane impurity of greater than 0.1 mol%, for example between 0.1 mol% and 0.3 mol%, for example between 0.1 mol% and 0.2 mol%.
